# EUROPÄISCHE PATENTSCHRIFT

(11) **EP 1 506 358 B1**
(45) Veröffentlichungstag und Bekanntmachung des Hinweises auf die Patenterteilung: **14.12.2005**
(21) Anmeldenummer: 03735401.6
(22) Anmeldetag: 16.05.2003
(51) Int. Cl.: F16H 55/38, F16H 55/56

(54) **AUTOMATGETRIEBE MIT WENIGSTENS ZWEI KEGELSCHEIBENSÄTZEN**
AUTOMATIC TRANSMISSION HAVING AT LEAST TWO CONICAL DISK SETS
TRANSMISSION AUTOMATIQUE COMPORTANT AU MOINS DEUX JEUX DE POULIES CONIQUES

(30) Priorität: 22.05.2002 DE 10222520
(43) Veröffentlichungstag der Anmeldung: 16.02.2005
(73) Patentinhaber: ZF FRIEDRICHSHAFEN AG, 88038 Friedrichshafen (DE)
(72) Erfinder: REISCH, Matthias, 88214 Ravensburg (DE); WEINMANN, Olrik, 88054 Friedrichshafen (DE); SICH, Bernhard, 88045 Friedrichshafen (DE); EBENHOCH, Michael, 88045 Friedrichshafen (DE)
(86) Internationale Anmeldenummer: PCT/EP2003/005147
(87) Internationale Veröffentlichungsnummer: WO 2003/098074

(56) Entgegenhaltungen:
- DE-A- 2 044 359
- DE-A- 3 000 264
- DE-A- 10 060 149
- DE-A- 10 139 121
- GB-A- 165 107

## Beschreibung

Die Erfindung betrifft ein Automatgetriebe mit wenigstens zwei Kegelscheibensätzen gemäß der im Oberbegriff des Patentanspruches 1 näher definierten Art, und wie aus dem gattungsgemäßen Dokument DE 3000264A bekannt ist.

Bei aus der Praxis bekannten Automatgetrieben, welche stufenlose Umschlingungsgetriebe bzw. sogenannte CVT-Getriebe darstellen, sind üblicherweise zwei einander gegenüberliegend auf einer Welle angeordnete, jeweils einen Kegelscheibensatz ausbildende Kegelscheiben axial zueinander beweglich bzw. verschiebbar ausgeführt. Eine Übersetzungsverstellung in einem derartigen Automatgetriebe erfolgt durch Abstandsänderungen zwischen den Kegelscheiben der jeweiligen Kegelscheibensätze. Die Abstandsänderungen bewirken eine Veränderung der Radien bzw. Durchmesser eines Umschlingungsbereiches des Riemens an den Kegelscheiben der Kegelscheibensätze.

Die Übersetzungsverstellung wird bei bekannten Umschlingungsgetrieben dadurch eingeleitet, daß an dem Kegelscheibensatz, an dem der Abstand zwischen den Kegelscheiben verändert werden soll, eine axiale Anpreßkraft zwischen einer Kegelscheibe, dem Riemen und der anderen Kegelscheibe erhöht oder erniedrigt wird. Aufgrund dieser Krafterhöhung bzw. Krafterniedrigung wird der Riemen in seinem Anlagebereich an den Kegelscheiben auf eine Spiralbahn gezwungen, so daß er sich auf einen größeren Laufradius oder einen kleineren Laufradius zu bewegt.

Besonders bei trockenen Umschlingungsgetrieben ist ein Reibbeiwert zwischen den Kegelscheiben und dem Riemen relativ hoch, so daß zwischen dem Riemen und den Kegelscheiben während der Übersetzungsverstellung eine Selbsthemmung auftritt und der Riemen an den Kegelscheiben nicht radial nach außen von einem kleineren auf einen größeren Umschlingungsdurchmesser gleiten kann. Vielmehr wird auf den Riemen während der Übersetzungsverstellung eine hohe Pressung ausgeübt.

Insbesondere in jenem Anlagebereich des Riemens an den Kegelscheiben, wo der Riemen aus dem Eingriff mit den Kegelscheiben eines Kegelscheibensatzes geführt wird, treten hohe Auskeilkräfte auf, die einen unerwünscht hohen Riemenverschleiß sowie eine hohe Wärmeentwicklung zur Folge haben.

Des weiteren sind bei den bekannten Umschlingungsgetrieben hohe mechanische Stelleistungen für eine Übersetzungsverstellung erforderlich, die mit zunehmender Verstellgeschwindigkeit überproportional ansteigen und die nur mit sehr leistungsstarken mechanischen Aktuatoren erreicht werden. Hierbei stellt die mechanische Belastbarkeit bzw. Festigkeit des Riemens eine Belastungsgrenze dar, die gleichzeitig eine Limitierung der Verstellgeschwindigkeiten bei der Übersetzungsverstellung ausbildet.

Daraus ergibt sich der Nachteil, daß mit derartigen Automatgetrieben die oftmals erforderlichen Verstellgeschwindigkeiten des Variators nicht erreicht werden, um den Variator beispielsweise bei einer Vollbremsung aus mittleren Fahrgeschwindigkeiten bei maximal eingestellter Übersetzung vollständig in eine einer Anfahrübersetzung äquivalente Stellung zurückzufahren.

Um dennoch einen hohen Fahrkomfort zu gewährleisten und ein gutes Anfahrverhalten zu ermöglichen, ist es in der Praxis unter anderem vorgesehen, eine Anfahrkupplung abtriebsseitig anzuordnen oder in ein stufenloses Automatgetriebe einen separaten Anfahrgang einzubauen. Dabei weist insbesondere die abtriebsseitige Anordnung der Anfahrkupplung den Nachteil auf, daß zusätzliche Schwungmassen vorgesehen werden müssen, die eine unerwünschte Vergrößerung des Automatgetriebes sowie eine Erhöhung der Herstellkosten zur Folge haben.

Aufgabe der vorliegenden Erfindung ist es, ein Automatgetriebe bzw. ein stufenloses Umschlingungsgetriebe zur Verfügung zu stellen, bei welchem eine Übersetzungsverstellung mit niedrigen Stellkräften und einem geringen Verschleiß durchführbar ist, und das sich durch hohe Verstellgeschwindigkeiten auszeichnet.

Erfindungsgemäß wird diese Aufgabe mit einem Automatgetriebe gemäß den Merkmalen des Patentanspruches 1 gelöst.

Bei dem Automatgetriebe nach der Erfindung ist eine Anordnung von zwei Drehachsen zweier Kegelscheiben eines Kegelscheibensatzes zueinander variierbar, wobei unter einer Anordnung von zwei Drehachsen zweier Kegelscheiben eines Kegelscheibensatzes vorliegend unter anderem eine fluchtende Anordnung der Drehachsen, eine Anordnung, bei der die Drehachsen sich schneiden und einen Winkel miteinander einschließen, eine Anordnung mit parallel zueinander verlaufenden Drehachsen sowie eine windschiefe Anordnung zweier Drehachsen zu verstehen ist.

Durch die Variierbarkeit der Anordnung besteht insbesondere die Möglichkeit, eine Anordnung zwischen den Drehachsen zweier Kegelscheiben eines Kegelscheibensatzes während einer Übersetzungsverstellung ausgehend von einer fluchtenden und parallelen Anordnung der Drehachsen der Kegelscheiben derart gezielt zu verändern, daß wenigstens eine erste Kegelscheibe in Bezug auf eine zweite Kegelscheibe eines Kegelscheibensatzes verlagert wird, so daß die zwei Drehachsen der Kegelscheiben des Kegelscheibensatzes einen Winkel einschließen. Auf diese Weise wird ein Einlaufradius des Riemens in einen Umschlingungsbereich an dem Kegelscheibensatz sowie ein Auslaufradius des Riemens aus dem Umschlingungsbereich vergrößert bzw. verkleinert.

Dabei nimmt eine einer Riemenbreite des Riemens entsprechende Äquidistante zwischen den beiden Kegelscheiben des Kegelscheibensatzes, die bei einer fluchtenden Anordnung der Drehachsen der Kegelscheiben des Kegelscheibensatzes eine Kreislinie darstellt, wenigstens annähernd die Form einer Spirale an, welcher der Lauf des Riemens folgt. In Abhängigkeit der Änderung der Anordnung und der damit einhergehenden Änderung des Einlauf- und des Auslaufradius, "schraubt" sich der Riemen auf einen höheren bzw. einen kleineren Umschlingungsradius zwischen den beiden Kegelscheiben eines Kegelscheibensatzes, bis die gewünschte Übersetzung erreicht ist.

Mit dieser Vorgehensweise sind hohe Verstellgeschwindigkeiten bei geringen Stelleistungen gegeben, da im Gegensatz zu den aus der Praxis bekannten Verstelleinrichtungen, bei welchen eine Übersetzungsverstellung durch Verpressen der Kegelscheiben eines Kegelscheibensatzes und des Riemens in axialer Richtung des Kegelscheibensatzes realisiert wird, der Riemen ohne wesentliche Erhöhung der axialen Kräfte an einem Kegelscheibensatz innerhalb kürzester Zeit in seine neue Position gebracht wird.

Die vergleichsweise höheren Verstellgeschwindigkeiten bei Übersetzungsverstellungen des Automatgetriebes nach der Erfindung als bei aus der Praxis bekannten Automatgetrieben führen z. B. vorteilhafterweise dazu, daß im Falle einer Vollbremsung aus mittlerer Fahrgeschwindigkeit mit einer Fahrgeschwindigkeitsreduktion bis hin zum Fahrzeugstillstand eine eingestellte hohe Übersetzung des Automatgetriebes bis zu einem sich zeitlich sofort an die Vollbremsung anschließenden Anfahrvorgang vollständig auf eine kleine Anfahrübersetzung zurückgestellt werden kann.

Damit besteht auch die Möglichkeit, eine Anfahrkupplung primärseitig, d. h. antriebsseitig anzuordnen, wodurch einerseits die Herstellkosten des Automatgetriebes gesenkt werden und andererseits Bauraum eingespart wird.

Die Reduzierung des Bauraumbedarfes gegenüber einer abtriebsseitigen Anordnung einer Anfahrkupplung ergibt sich insbesondere dadurch, daß bei der antriebsseitigen Anordnung der Anfahrkupplung ein im Getriebeeingangsbereich vorgesehenes Schwungrad als Schwungmasse für die Anfahrkupplung nutzbar ist, so daß lediglich die Belaglamellen sowie ein Ausrückmechanismus zur Ausgestaltung der antriebsseitig angeordneten Anfahrkupplung vorgesehen werden muß.

Des weiteren besteht durch die Änderung der Anordnung zwischen den Drehachsen zweier Kegelscheiben eines Kegelscheibensatzes vorteilhafterweise die Möglichkeit, einen Wirkungsgrad eines Variators des Automatgetriebes auch in einem stationären Betriebsbereich, d. h. während eines Betriebes des Automatgetriebes ohne Übersetzungsänderung, zu erhöhen, da durch die Änderung der Anordnung der Drehachsen einem "natürlichen" Riemenspirallauf dahingehend entgegengewirkt werden kann, daß der Spirallauf verringert und eine Auskeilkraft des Riemens aus dem Kegelscheibensatz minimiert wird. Auf diese Weise wird ein realer spiralförmiger Verlauf des Riemens zwischen zwei Kegelscheiben eines Kegelscheibensatzes einem idealen wenigstens annähernd kreisförmigen Verlauf angenähert und eine Verlustleistung reduziert.

Weitere Vorteile und vorteilhafte Ausgestaltungen des Gegenstandes nach der Erfindung sind den Patentansprüchen, der Beschreibung und der Zeichnung entnehmbar.

Mehrere vorteilhafte Ausführungsbeispiele des Automatgetriebes nach der Erfindung sind in der Zeichnung schematisch vereinfacht dargestellt und werden in der nachfolgenden Beschreibung näher erläutert, wobei in der Beschreibung für gleiche Bauteile bzw. für funktionsgleiche Bauteile die selben Bezugszeichen verwendet werden.
Es zeigt:
- Fig.1: eine stark schematisierte Teilschnittansicht eines Variators eines stufenlosen Automat- getriebes;
- Fig.2: einen Kegelscheibensatz eines Variators in ei- ner stark schematisierten Einzelansicht;
- Fig.3: eine Seitenansicht einer Kegelscheibe des Ke- gelscheibensatzes gemäß Fig. 2;
- Fig.4: einen Kegelscheibensatz eines Variators in ei- ner stark schematisierten Einzelansicht;
- Fig.5: den Kegelscheibensatz gemäß Fig. 4, wobei eine Verlagerung einer Welle infolge hoher Trumkräfte dargestellt ist;
- Fig.6: eine weitere Ausführungsform eines Kegelschei- bensatzes eines Variators in einer stark sche- matisierten Einzelansicht und
- Fig.7: den Kegelscheibensatz gemäß Fig. 6, wobei eine Welle aufgrund hoher Trumkräfte eine definier- te Durchbiegung aufweist.

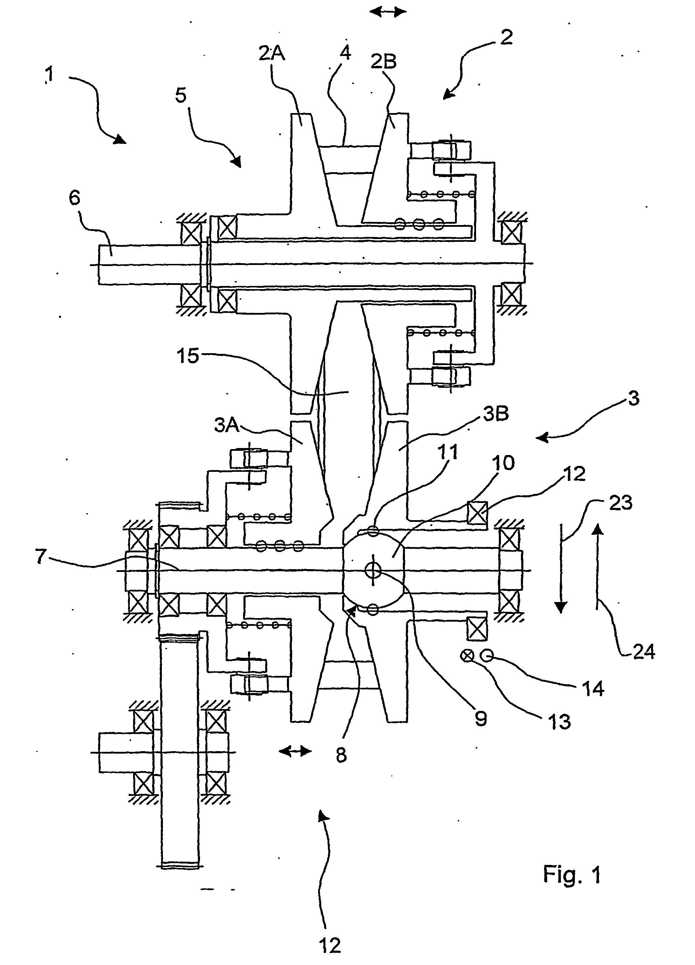

In Fig. 1 ist ein Automatgetriebe 1 mit zwei Kegelscheibensätzen 2 und 3 dargestellt, welche jeweils zwei Kegelscheiben 2A, 2B und 3A, 3B aufweisen. Zwischen den Kegelscheiben 2A, 2B und den Kegelscheiben 3A, 3B ist ein Umschlingungselement 4 zur Drehmomentübertragung von dem ersten Kegelscheibensatz 2 auf den zweiten Kegelscheibensatz 3 vorgesehen.

Die beiden Kegelscheibensätze 2, 3 sowie das Umschlingungselement 4 stellen Komponenten eines Variators 5 des Automatgetriebes 1 dar, welches vorliegend als ein stufenloses Umschlingungsgetriebe mit einem als Trockenverbundriemen bzw. Riemen 4 ausgeführten Umschlingungselement ausgebildet ist, wobei das Umschlingungselement auch eine Kette oder ein Schubgliederband sein kann. Der hier vorgesehene Trockenverbundriemen hat gegenüber Ketten oder Schubgliederbändern den Vorteil, daß dieser kein Öl benötigt, weshalb die Anpreßkräfte zur Drehmomentübertragung wesentlich niedriger sind.

Bei dem in Fig. 1 schematisiert dargestellten Ausschnitt des Automatgetriebes 1 ist jeweils die Kegelscheibe 2B und die Kegelscheibe 3A in axialer Richtung einer Welle 6 bzw. 7, welche vorliegend jeweils als eine Antriebswelle 6 bzw. eine Abtriebswelle 7 ausgebildet ist, in Bezug auf die Kegelscheibe 2A bzw. die Kegelscheibe 3B verschiebbar angeordnet. Durch eine Abstandsänderung der Kegelscheiben 2A, 2B bzw. der Kegelscheiben 3A, 3B kann eine Übersetzungsänderung in an sich bekannter Art und Weise erfolgen, wodurch sich die Radien, auf denen der Riemen 4 auf den Kegelscheiben 2A bis 3B läuft, verändern. Der Verstellvorgang kann eingeleitet werden, indem die Kegelscheiben 2A, 2B bzw. 3A, 3B der Kegelscheibensätze 2 bzw. 3 durch eine Erhöhung oder Erniedrigung einer axialen Anpreßkraft eines nicht näher dargestellten Axialaktors aufeinander zu oder voneinander weg bewegt werden.

Um eine unzulässig hohe Kraftvergrößerung zur Übersetzungsverstellung wirkungsvoll zu vermeiden und eine Verstellgeschwindigkeit des Variators 5 zu erhöhen, ist die Kegelscheibe 3B drehfest auf der Abtriebswelle 7 auf einem Gleichlaufgelenk 8 gelagert und um eine Kippachse 9 kippbar ausgeführt.

Durch eine Verkippung der Kegelscheibe 3B nimmt die der Riemenbreite des Riemens 4 entsprechende Äquidistante, d. h. jeweils die Berührlinie des Riemens 4 mit den beiden Kegelscheiben 3A, 3B des Kegelscheibensatzes 3 im Umschlingungsbereich, die bei unverkippter Kegelscheibe 3B wenigstens annähernd eine Kreislinie dargestellt, wenigstens annähernd die Form einer Spirale an. In Abhängigkeit der Kipprichtung der Kegelscheibe 3B schraubt sich der Riemen 4 ohne wesentliche Erhöhung einer axialen Druckkraft auf den Riemen 4 auf einen größeren oder einen kleineren Umschlingungsradius bzw. Umschlingungsdurchmesser in Bezug auf die Kegelscheiben 3A, 3B nach außen oder nach innen.

Die dargestellte Kombination der axialen Verschieblichkeit der Kegelscheiben 2B und 3A sowie der kippbaren Kegelscheibe 3B führt dazu, daß der Variator 5 bzw. die über den Variator 5 einstellbare Übersetzung mit hohen Verstellgeschwindigkeiten in eine gewünschte Übersetzung verändert werden kann, wobei die Verstellung im wesentlichen durch die Kippbewegung der Kegelscheibe 3B durchgeführt wird und die axiale Verstellung der Kegelscheiben lediglich zur Unterstützung vorgesehen ist.

Die konstruktive Ausführung des Variators 5 bietet somit die Möglichkeit, eine Übersetzungsverstellung nur über eine Kippbewegung der Kegelscheibe 3B ohne eine axiale Verstellung der Kegelscheibe 2B und/oder der Kegelscheibe 3A durchzuführen.

Durch die Verkippung der Kegelscheibe 3B bzw. die Möglichkeit, die Anordnung zwischen den Drehachsen der Kegelscheiben 3A, 3B zu ändern, ist gewährleistet, daß eine Übersetzungsverstellung ohne auf den Riemen und die Kegelscheiben 2A bis 3B einwirkende unzulässig hohe Druckkräfte durchgeführt wird, womit ein Riemenverschleiß, eine unerwünscht hohe Wärmeentwicklung sowie eine Selbsthemmung des Riemens 4 auf einfache Art und Weise vermieden bzw. reduziert wird.

Das Gleichlaufgelenk 8 ist vorliegend mit einem kugelförmigen inneren Gelenkkörper 10 ausgeführt, auf welchem die Kegelscheibe 3B kippbar geführt ist, wobei das Gleichlaufgelenk 8 als Radiallager, Axiallager und als Schwenklager für die Kegelscheibe 3B vorgesehen ist.

Zur Drehmomentmitnahme sind zwischen dem Gelenkkörper 10 und der Kegelscheibe 3B mehrere als gehärtete, geschliffene Kugeln ausgeführte Sperrkörper 11 vorgesehen, die in nicht näher dargestellten Rillen, welche an der Oberfläche des Gelenkkörpers 10 eingeschliffen sind, geführt sind und zur Übertragung des Drehmomentes von der Kegelscheibe 3B auf die Abtriebswelle 7 gleichzeitig in die Kegelscheibe 3B eingreifen.

In einer hiervon abweichenden, nicht näher dargestellten Ausführungsform des Automatgetriebes nach der Erfindung kann es auch vorgesehen sein, daß die Sperrkörper 11 zur Drehmomentübertragung als Blechmembrane ausgeführt werden, die wesentlich billiger herstellbar sind, da sie nicht gehärtet oder geschliffen sind.

Ebenfalls kann es bei einer weiteren, von der in der Zeichnung gezeigten Ausführung abweichenden konstruktiven Ausgestaltung des erfindungsgemäßen Automatgetriebes vorgesehen sein, daß die drehfeste, aber eine Kippbewegung zulassende Verbindung zwischen der Kegelscheibe 3B und der Abtriebswelle 7 derart elastisch ausgeführt ist, daß die Kippbewegung der Kegelscheibe 3B ab einer bestimmten Druckkraft zwischen der Kegelscheibe 3B und dem Riemen 4 zustande kommt.

Damit wird auf einfache Art und Weise einer Überlastung des Riemens 4 entgegengewirkt. Darüber hinaus kann durch eine entsprechende konstruktive Ausgestaltung der elastischen Verbindung zwischen der Abtriebswelle und der Kegelscheibe eine zu große Abweichung der Äquidistanten von ihrer idealen kreisförmigen Form minimiert werden, wodurch ein Wirkungsgrad des Variators vorteilhafterweise erhöht wird.

Um eine Verkippung der in Fig. 1 dargestellten Kegelscheibe 3B um die Kippachse 9 zu erreichen, greift an einem Lager 12 eine nicht näher dargestellte Aktuatoreinrichtung derart an, daß die Kegelscheibe 3B entsprechend den im Bereich des Lagers 12 in Fig. 1 dargestellten Richtungen 13 oder 14 in die Zeichenebene hinein oder aus dieser heraus verschoben wird, wodurch die Kegelscheibe 3B eine Kippbewegung um die Kippachse 9 ausführt.

Des weiteren besteht die Möglichkeit, das Lager 12 mittels der Aktuatoreinrichtung in Richtung des antriebsseitigen Kegelscheibensatzes 2 und von diesem weg zu verstellen, wie es mit Richtungspfeilen 23, 24 dargestellt ist, wodurch die Kegelscheibe 3B um eine weitere Kippachse 22 verkippt werden kann. Die weitere Kippachse 22 ist senkrecht zur Drehachse der Kegelscheibe 3A sowie zum Leer- bzw. Lasttrum 15 des Riemens 4A geordnet.

Mit dieser aktiv über die Aktuatoreinrichtung steuerbaren Kippbewegung wird einer der aktuell an dem Variator 5 eingestellten Übersetzung sowie dem aktuell von dem Variator 5 zu übertragenden Drehmoment entsprechenden Aufspreizung des Kegelscheibensatzes 3 bzw. der Kegelscheiben 3A, 3B auf einfache Art und Weise entgegengewirkt.

Mit einer Verkippung der Kegelscheibe 3B um die weitere Kippachse 22 wird insbesondere eine Aufspreizung der Kegelscheiben 3A, 3B in einem Abschnitt des Umschlingungsbereiches reduziert bzw. gänzlich ausgeglichen, in welchem in der Regel ein Maximum der Aufspreizung vorliegt. Damit wird ein radiales Nach-Innen-Gleiten des Riemens 4 im Umschlingungsbereich bzw. im Abschitt des Umschlingungsbereiches, welches mit zunehmender Aufspreizung der Kegelscheiben 3A, 3B auftritt und unter anderem hohe Auskeilkräfte verursacht, wirksam vermieden.

Selbstverständlich kann es auch vorgesehen sein, daß eine Verkippung einer Kegelscheibe eines Kegelscheibensatzes mit Hilfe einer Aktuatoreinrichtung zur Verbesserung eines Wirkungsgrades des Automatgetriebes realisiert wird, bei der eine Verkippung der Scheibe um eine Kippachse erfolgt, die senkrecht zur Drehachse der kippbaren Kegelscheibe angeordnet ist, und wobei der maximale Kippweg der Kegelscheibe in Richtung der anderen Kegelscheibe eines Kegelscheibensatzes jeweils mit dem Maximum der Scheibenaufspreizung des betreffenden Kegelscheibensatzes zusammenfällt. Das heißt, daß eine Lage der weiteren Kippachse jeweils in Abhängigkeit der Richtung einer resultierenden, an dem Kegelscheibensatz angreifenden Kraft, welche aus den Trumkräften des Riemens resultiert, variiert. Dabei kann eine zusätzliche Verkippung der Kegelscheibe zur Einstellung einer Übersetzungsänderung des Variators in der vorbeschriebenen Art und Weise durch die Aktuatoreinrichtung oder mit einer weiteren Aktuatoreinrichtung vorgesehen sein.

Die Aktuatoreinrichtung zur Verstellung der Anordnung der Drehachse der Kegelscheibe 3B gegenüber der Drehachse der Kegelscheibe 3A ist als ein Linearantrieb ausgeführt und weist vorliegend einen Elektromotor mit einer Spindel auf, um die Kegelscheibe 3B um die Kippachse 9 sowie die weitere Kippachse 22 zu verkippen. Der maximale Kippweg bzw. Stellweg des Lagers 12 liegt in Abhängigkeit des jeweilig vorliegenden Anwendungsfalles in einem Bereich von 1/10 mm bis hin zu einem oder mehreren Millimetern.

Alternativ hierzu kann selbstverständlich anstatt des Elektromotors und der Spindel auch eine piezoelektrische Stelleinheit vorgesehen werden, wobei größere Stellwege über ein zwischen dem piezoelektrischen Aktor und dem Lager 12 angeordnetes Stellwegvergrößerungssystem realisiert werden können.

Das Lager 12 ist vorliegend als ein Rillenkugellager ausgeführt, wobei eine bei der Verstellung des Lagers 12 auftretende Kippbewegung des Außenringes des Lagers 12 gegenüber dem Linearantrieb von einem zwischen der Spindel und dem Außenring des Lagers 12 angeordneten Koppelelement aufgefangen wird.

Wenn das Lager 12 als ein Pendelrollenlager ausgeführt ist, kann auf das Koppelelement verzichtet werden, da die Kippbewegungen von einem Pendelrollenlager kompensiert werden.

Die Kippeinrichtung an sich kann grundsätzlich sowohl antriebsseitig als auch abtriebsseitig oder an beiden Achsen angeordnet sein.

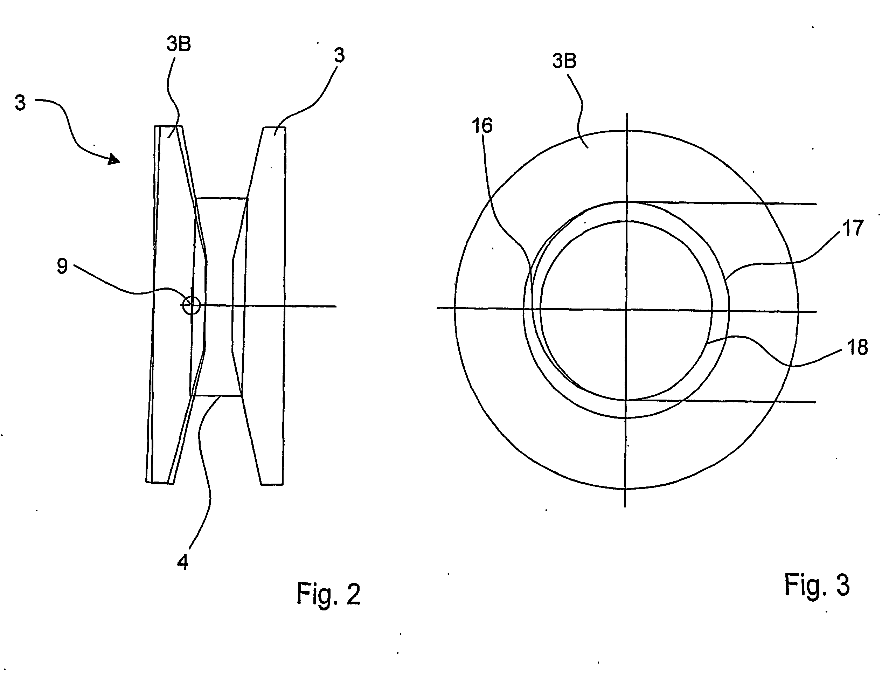

In Fig. 2 ist der Kegelscheibensatz 3 gemäß Fig. 1 dargestellt, wobei die Kegelscheibe 3B gleichzeitig in unverkippter sowie in verkippter Lage gezeigt ist. Damit korrespondierend ist in Fig. 3 die Veränderung des Einlauf- bzw. des Auslaufradius des Riemens 4 aufgrund der in Fig. 2 dargestellten Kippbewegung der Kegelscheibe 3B gegenüber der Kegelscheibe 3A gezeigt, wobei die Äquidistante 16 wie in Fig. 3 dargestellt in verkippter Lage der Kegelscheibe 3B eine Spiralform aufweist.

Des weiteren ist in Fig. 3 ein Kreis 17 dargestellt, dessen Radius dem Umschlingungsradius im Einlaufbereich des Riemens 4 des Kegelscheibensatzes 3 entspricht. Ein weiterer Kreis 18, dessen Radius dem Umschlingungsradius im Auslaufbereich des Riemens 4 des Kegelscheibensatzes 3 entspricht, stellt die ideale Form der Äquidistante am Ende der Übersetzungsverstellung dar.

Durch die Kippbewegung der Kegelscheibe 3B um die Kippachse 9, die senkrecht zur Drehachse der Kegelscheibe 3B steht und wenigstens annähernd parallel zu einem Leertrum bzw. einem Lasttrum 15 des Riemens 4 verläuft, ausgehend von einer fluchtenden Anordnung der Drehachse der Kegelscheibe 3A und der Drehachse 3B in eine Anordnung, bei der die Drehachsen der Kegelscheiben 3A und 3B einen Winkel miteinander einschließen, schraubt sich der Riemen 4 von dem Radius des Kreises 17 in Richtung des Radius des weiteren Kreises 18, bis die Form der Äquidistante 16 dem weiteren Kreis 18 entspricht und die entsprechende Übersetzung am Variator 5 eingestellt ist.

In einer weiteren Ausgestaltung des erfindungsgemäßen Automatgetriebes kann es selbstverständlich auch vorgesehen sein, daß eine Übersetzungsverstellung und/oder eine Wirkungsgraderhöhung eines Variators lediglich durch die Kippbewegung einer Kegelscheibe erfolgt, und daß auf eine axiale Verstellung der Kegelscheiben eines Kegelscheibenpaares, wie es bei aus der Praxis bekannten CVT-Getrieben für eine Übersetzungsverstellung erforderlich ist, verzichtet werden kann. Hierbei sind die auf der Antriebswelle bzw. auf der Abtriebswelle in axialer Richtung jeweils beweglich angeordneten Kegelscheiben mit einer sogenannten Drehmomentrampe kombiniert, mittels welcher eine drehmomentabhängige Anpreßkraft zwischen den Kegelscheiben und dem Riemen 4 eingestellt wird.

Bei der in der Zeichnung dargestellten Ausführungsform des Automatgetriebes 1 wird eine axiale Anpreßkraft zwischen den Kegelscheiben 2A, 2B und 3A, 3B und dem Riemen 4 ebenfalls jeweils über eine Drehmomentrampe aufgebracht. Die Druckkraft wird dabei proportional zu einem anliegenden Drehmoment und als Funktion des Stellweges der betreffenden Kegelscheibe und somit als Funktion der aktuell eingestellten Übersetzung erzeugt, wobei das anliegende Drehmoment in einer an sich bekannten Art und Weise auf Wälzkörper der Drehmomentrampe übertragen wird. Aufgrund der Anordnung der Wälzkörper im Bereich der Kegelscheiben 2B und 3A wird das anliegende Drehmoment in eine auf die Kegelscheibensätze 2, 3 und den Riemen 4 wirkende axiale Anpreßkraft umgewandelt, ohne daß dabei eine Übersetzungsänderung auftritt.

Darüber hinaus besteht auch die Möglichkeit, daß mehr als eine Kegelscheibe des Variators kippbar ausgestaltet ist. So kann es durchaus vorgesehen sein, daß beide Scheiben eines Kegelscheibensatzes kippbar ausgeführt sind.

Darüber hinaus liegt es selbstverständlich im Ermessen des Fachmannes, ein Automatgetriebe gemäß der Erfindung mit einem Variator auszubilden, bei dem wenigstens eine Kegelscheibe in radialer Richtung der Kegelscheiben translatorisch bewegbar ist und/oder eine Drehachse einer Kegelscheibe taumelnd bzw. oszillierend gegenüber der Drehachse der zweiten Kegelscheibe eines Kegelscheibensatzes bewegt werden kann, so daß eine Anordnung von Drehachsen zweier Kegelscheiben eines Kegelscheibensatzes verändert wird und eine Übersetzungsverstellung durchgeführt wird und/oder generell der Wirkungsgrad des Automatgetriebes verbessert wird.

Eine die Kegelscheibe betätigende Aktuatoreinrichtung kann hierbei zweckmäßig mit einem exzentrischen Antrieb versehen sein.

Des weiteren kann es in einer Ausgestaltungsvariante auch vorgesehen sein, daß die einzelnen Kegelscheiben zusätzlich in axialer Richtung mittels vorzugsweise hydraulischer Stellorgane beweglich ausgeführt sind, um einen senkrechten Abstand zwischen den Kegelscheiben eines Kegelscheibensatzes in an sich bekannter Art und Weise zu verändern und eine Verstellgeschwindigkeit des Variators weiter zu erhöhen.

Grundsätzlich liegt es im Ermessen des Fachmannes die verschiedenen vorgenannten Möglichkeiten, zum Variieren der Anordnung von Drehachsen zweier Kegelscheiben eines Kegelscheibensatzes zueinander in Abhängigkeit des jeweilig vorliegenden Anwendungsfalles in geeigneter Art und Weise zu kombinieren, wobei die Kegelscheiben kippbar und/oder in radialer Richtung der Kegelscheiben verstellbar und/oder deren Drehachse taumelnd bzw. oszillierend beweglich und/oder axial verschieblich ausgeführt sein können.

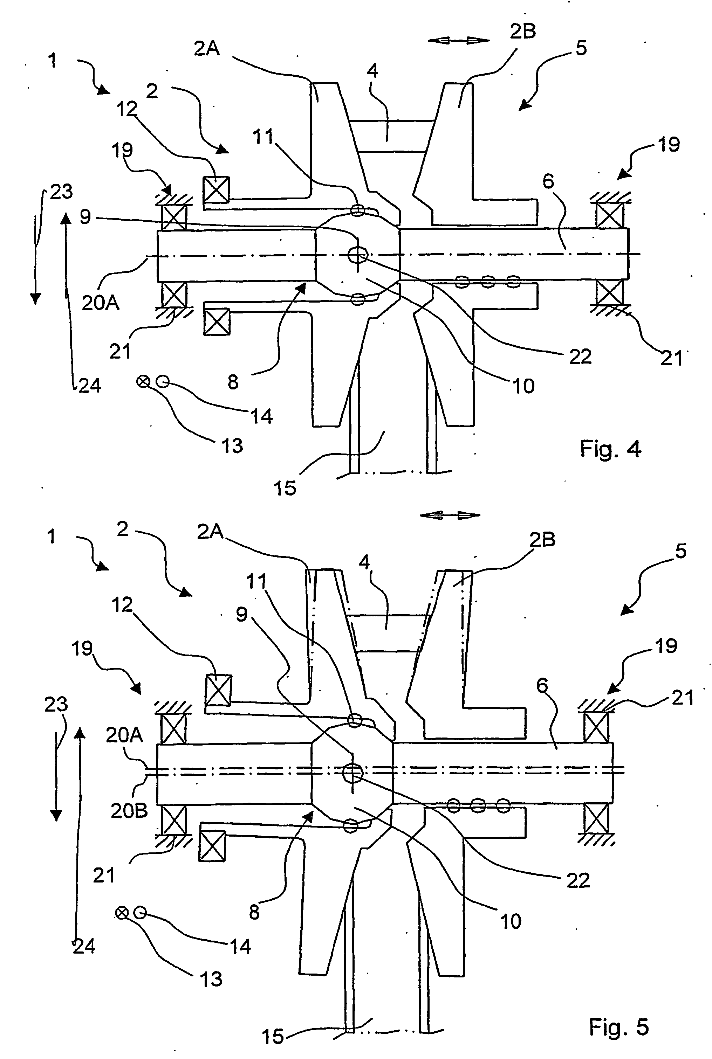

Bezug nehmend auf Fig. 4 ist der Kegelscheibensatz 2 des Variators 5 mit einer in axialer Richtung verschieblich ausgeführten Kegelscheibe 2B und einer kippbaren Kegelscheibe 2A dargestellt. Eine Lagerung 19 der Antriebswelle 6 ist dabei derart elastisch ausgeführt, daß bei ansteigenden Trumkräften des Riemens 4 die Antriebswelle 6 und damit der Kegelscheibensatz 2 in Richtung des in Fig. 4 nicht näher dargestellten weiteren Kegelscheibensatzes 3 verschoben wird.

Die Fig. 5 zeigt den Kegelscheibensatz 2 in einer im Vergleich zur Darstellung in Fig. 4 verschobenen Position, wobei die Verschiebung auf hohe auf die Kegelscheiben einwirkende Trumkräfte zurückzuführen ist. Um die verändernde Position der Antriebswelle 6 im Vergleich zu Fig. 4 zu verdeutlichen, ist in Fig. 5 eine Drehachse der Antriebswelle 6 jeweils in ihrer ursprünglichen Position 20A und in der neuen verschobenen Position 20B näher gezeigt.

Die Verschiebung der Antriebswelle 6 resultiert aus einer elastischen Gehäuseverformung eines Lagergehäuses 21 der Lagerung 19. Das von der Lagerung 19 der Antriebswelle 6 entkoppelte Lager 12 verbleibt wenigstens annähernd in seiner ursprünglichen Position, wodurch die Kegelscheibe 2A in der in Fig. 5 dargestellten Art und Weise um eine weitere Kippachse 22 verkippt wird. Die weitere Kippachse 22 steht senkrecht auf der Drehachse der Kegelscheibe 2A sowie auf dem Leertrum bzw. Lasttrum 15 des Riemens 4.

Die in Fig. 5 dargestellte Verschiebung der Antriebswelle 6 ist die in der Zeichenebene darstellbare Verschiebung, wobei die Verschiebung der Antriebswelle 6 in Richtung der resultierenden Kraft erfolgt, welche sich aus der Summe aller im Umschlingungsbereich des Kegelscheibensatzes 2 auftretenden Trumkräfte bzw. Umschlingungskräfte ergibt. Die Richtung dieser resultierenden Kraft kann beliebig im Raum ausgerichtet sein, wobei die Hauptwirkungsrichtung der resultierenden Kraft in Richtung des nicht näher dargestellten weiteren Kegelscheibensatzes 3 liegt.

Aufgrund der sphärischen Ausbildung des Gleichlaufgelenkes erfolgt eine mit der Verschiebung der Antriebswelle 6 korrespondierende Verkippung der Kegelscheibe 2A, die einem durch eine Kegelscheibenaufspreizung verursachten verlustbehafteten und einen Wirkungsgrad des Automatgetriebes reduzierenden Spirallauf des Riemens 4 zwischen den beiden Kegelscheiben 2A, 2B entgegengewirkt. Die Aufspreizung der Kegelscheiben 2A, 2B tritt infolge hoher Trumkräfte des Riemens und der Bauteilelastizitäten der Kegelscheiben 2A, 2B in Fig. 5 auf, wobei die strichpunktierte Darstellung der Kegelscheiben 2A, 2B die in Fig. 4 dargestellte Position wiedergibt und die durchgezogene Darstellung der Kegelscheiben 2A, 2B den verformten Zustand der Kegelscheiben 2A, 2B zeigt.

Die definierte elastische Verformbarkeit des Lagergehäuses 21 der Lagerung 19 der Antriebswelle 6 bewirkt mit steigenden Trumkräften eine Soll-Scheibenvorverkippung, welche eine Funktion der zu erwartenden Scheibenspreizung darstellt. Die zu erwartende Scheibenspreizung der Kegelscheiben 2A, 2B ist jeweils abhängig von der aktuell eingestellten Übersetzung an dem Variator 5 und den Trumkräften. Die Trumkräfte stützen sich über die Lagerung 19 der Antriebswelle 6 sowie die nicht näher dargestellte Lagerung der Abtriebswelle 7 ab.

Mit dieser Ausführungsform des Automatgetriebes 1 erhält man einen direkten Zusammenhang zwischen den Achskräften der Antriebswelle 6 bzw. der Abtriebswelle 7 und einer Scheibenvorverkippung, mit welcher das radial nach innen gerichtete Gleiten des Riemens 4 und die daraus resultierenden erhöhten Auskeilkräfte auf einfache Art und Weise wirkungsvoll vermieden werden. Damit wird eine Belastung des Riemens 4 erheblich reduziert, so daß ein Riemenverschleiß verringert wird und dessen Lebensdauer erhöht wird.

Die Scheibenvorverkippung wird dabei derart eingestellt, daß ein realer, sich negativ auf die Lebensdauer des Riemens 4 auswirkender Verlauf des Riemens 4 im Umschlingungsbereich des Kegelscheibensatzes 2 in Richtung eines idealen, vorzugsweise halbkreisförmigen Verlaufs des Umschlingungsbereiches verändert wird.

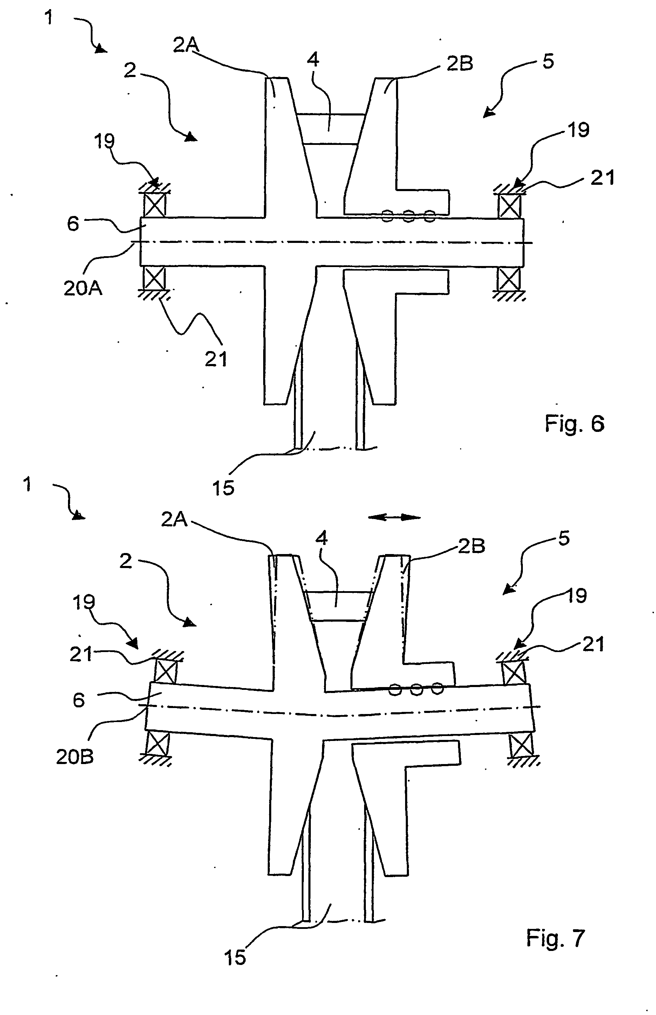

Eine weitere Ausführungsform des Automatgetriebes 1 ist in Fig. 6 und Fig. 7 dargestellt, wobei in Fig. 6 der Kegelscheibensatz 2 bei geringer Drehmomentübertragung und kleinen Trumkräften dargestellt ist. Dabei tritt eine vernachlässigbare Verformung der Antriebswelle 6 auf, so daß die Kegelscheiben 2A, 2B wenigstens annähernd parallel zueinander angeordnet sind. Die Kegelscheibe 2A ist vorliegend einstückig mit der Antriebswelle 6 ausgeführt, und die Kegelscheibe 2B ist in axialer Richtung der Antriebswelle 6 verschiebbar und drehfest auf der Antriebswelle 6 angeordnet. Die axiale Verschiebung der Kegelscheibe 2B wird über einen nicht näher dargestellten Aktuator ausgeführt, um eine gewünschte bzw. erforderliche Übersetzungsveränderung an dem Kegelscheibensatz 2 und damit des Variators 5 einstellen zu können.

Steigt das zu übertragende Drehmoment an, nehmen auch die auf den Kegelscheibensatz 2 einwirkenden Trumkräfte des Riemens 4 zu, die eine entsprechende elastische Verformung der Antriebswelle 6 zur Folge haben. Die elastische Verformung der Antriebswelle 6 führt zu einem Verkippen der beiden Kegelscheiben 2A, 2B, wodurch sich eine in Fig. 7 dargestellte Lageänderung der Kegelscheiben 2A, 2B ergibt. Des weiteren ist der Darstellung gemäß Fig. 7 entnehmbar, daß die Kegelscheiben 2A, 2B aufgrund der Trumkräfte und ihrer Bauteilelastizitäten zusätzlich elastisch verformt werden. Zum besseren Verständnis sind die unverkippten Positionen der Kegelscheiben 2A, 2B sowie ihr nicht verformter Zustände in Fig. 7 in strichpunktierter Form gezeigt. Gleichzeitig zeigt die mit durchgezogenen Linien ausgeführte Darstellung der Kegelscheiben 2A, 2B die neuen Stellungen und die verformten Zustände der Kegelscheiben 2A, 2B.

Die in Fig. 5 und Fig. 7 jeweils dargestellte und während des Betriebs des Automatgetriebes 1 zu erwartende Scheibenspreizung steht in Abhängigkeit der aktuell eingestellten Übersetzung des Variators sowie der auftretenden Trumkräfte, wobei über eine mit den Bauteilbelastungen des Variators 5 korrespondierende elastische Verformung der Antriebswelle 6 eine definierte Scheibenvorverkippung eingestellt werden kann. Dazu wird insbesondere ein Flächenträgheitsmoment der Antriebswelle über deren Länge, das heißt ein Verlauf des Flächenträgheitsmomentes der Antriebswelle 6 in axialer Richtung der Antriebswelle 6 derart eingestellt, daß eine den Wirkungsgrad des Variators 5 erhöhende Scheibenvorverkippung in Abhängigkeit einer Durchbiegung bzw. einer Verformung der Antriebswelle 6 erfolgt, die wiederum in Abhängigkeit der aktuell eingestellten Übersetzung und den Trumkräften erreicht wird. Die Einstellung des Verlaufes des Flächenträgheitsmomentes der Antriebswelle 6 ist über eine entsprechende Durchmessergestaltung der Antriebswelle 6, durch ein Hohlwellenprofil oder andere geeignete konstruktive Maßnahmen realisierbar.

Bei allen gezeigten erfindungsgemäßen Ausgestaltungen eines Automatgetriebes wird in vorteilhafter Weise ein Riemenspirallauf im Umschlingungsbereich der Kegelscheibensätze 2, 3 derart gezielt verringert oder zur Übersetzungsverstellung gezielt erzeugt, daß der Variator 5 bzw. das Automatgetriebe 1 einen höheren Wirkungsgrad aufweist, wodurch sich ein Kraftstoffverbrauch eines Fahrzeuges reduzieren läßt. Des weiteren wird aufgrund der Reduzierung der Auskeilkräfte eine Erwärmung des Riemens 4 verringert, wodurch der Riemen 4 insgesamt einer höheren Belastung ausgesetzt werden kann. Damit besteht vorteilhafterweise auch die Möglichkeit, über den variator 5 höhere Drehmomente von der Antriebswelle 6 auf die Abtriebswelle 7 zu übertragen. Zusätzlich wird die Lebensdauer des Riemens 4 durch die Herabsetzung des Riemenverschleißes erhöht.

### Bezugszeichen

- 1: Automatgetriebe
- 2: Kegelscheibensatz
- 2A, B: Kegelscheiben
- 3: Kegelscheibensatz
- 3A, B: Kegelscheiben
- 4: Riemen
- 5: Variator
- 6: Antriebswelle
- 7: Abtriebswelle
- 8: Gleichlaufgelenk
- 9: Kippachse
- 10: Gelenkkörper
- 11: Sperrkörper
- 12: Lager
- 13: Stellrichtung
- 14: Stellrichtung
- 15: Leertrum, Lasttrum
- 16: Äquidistante
- 17: Kreis
- 18: weiterer Kreis
- 19: Lagerung
- 20A, 20B: Drehachse der Antriebswelle
- 21: Lagergehäuse
- 22: weitere Kippachse
- 23: Richtungspfeil
- 24: Richtungspfeil

## Patentansprüche

1. Automatgetriebe (1) mit einem wenigstens zwei Kegelscheibensätze (2, 3) aufweisenden Variator (5), wobei über die Kegelscheibensätze (2, 3) ein Umschlingungselement (4) zur Drehmomentübertragung mit stufenloser Übersetzungsänderung geführt ist und die Anordnung der Drehachsen zweier Kegelscheiben (3A, 3B) eines Kegelscheibensatzes (3) zueinander variierbar ist, **dadurch gekennzeichnet, dass** mindestens an einer der Kegelscheiben (3B) ein Aktuator zum Variieren der Anordnung zwischen den Drehachsen der Kegelscheiben (3A, 3B) eines Kegelscheibensatzes (3) angreift, und dass eine Verstellung der Übersetzung durch eine Kippbewegung einer Kegelscheibe (3B) um eine Kippachse (9) erfolgt, und dass eine Änderung des axialen Abstands zwischen den Kegelscheiben (3A, 3B) der Kegelscheibensätze (2, 3) lediglich zur Unterstützung der Verstellung der Übersetzung vorgesehen ist.

2. Automatgetriebe nach Anspruch 1, **dadurch gekennzeichnet, daß** mindestens eine erste Kegelscheibe (3B) in Bezug auf eine zweite Kegelscheibe (3A) eines Kegelscheibensatzes (3) verkippbar ist.

3. Automatgetriebe nach Anspruch 2, **dadurch gekennzeichnet, daß** die erste Kegelscheibe (3B) um eine Kippachse (9) kippbar ist, die senkrecht zur Drehachse der ersten Kegelscheibe (3B) angeordnet ist.

4. Automatgetriebe nach Anspruch 3, **dadurch gekennzeichnet, daß** die Kippachse (9) wenigstens annähernd parallel zu einem Leertrum (15) oder Lasttrum des Riemens (4) verläuft.

5. Automatgetriebe nach einem der Ansprüche 2 bis 4, **dadurch gekennzeichnet, daß** sowohl die erste Kegelscheibe (3B) in Bezug auf die zweite Kegelscheibe (3A) als auch die zweite Kegelscheibe (3A) in Bezug auf die erste Kegelscheibe (3B) verkippbar ist.

6. Automatgetriebe nach einem der Ansprüche 2 bis 5, **dadurch gekennzeichnet, daß** die kippbare erste Kegelscheibe (3B) drehfest mit einer Welle (7) verbunden ist.

7. Automatgetriebe nach Anspruch 6, **dadurch gekennzeichnet, daß** die drehfeste Verbindung zwischen der ersten Kegelscheibe (3B) und der Welle (7) derart ausgeführt ist, daß die Kegelscheibe (3B) ab einer bestimmten Anpreßkraft zwischen der ersten Kegelscheibe (3B) und dem Riemen (4) verkippt.

8. Automatgetriebe nach Anspruch 6 oder 7, **dadurch gekennzeichnet, daß** die drehfeste Verbindung als ein Gleichlaufgelenk (8) ausgeführt ist.

9. Automatgetriebe nach Anspruch 6 oder 7, **dadurch gekennzeichnet, daß** die drehfeste Verbindung zwischen der Kegelscheibe (3B) und der Welle (7) elastisch ausgeführt ist.

10. Automatgetriebe nach einem der Ansprüche 1 bis 9, **dadurch gekennzeichnet, daß** mindestens an einer der Kegelscheiben (3B) ein Aktuator zum Variieren der Anordnung zwischen den Drehachsen der Kegelscheiben (3A, 3B) eines Kegelscheibensatzes (3) angreift.

11. Automatgetriebe nach Anspruch 10, **dadurch gekennzeichnet, daß** der Aktuator als ein Linearantrieb ausgeführt ist, der einen Elektromotor und eine Spindel aufweist.

12. Automatgetriebe nach Anspruch 10, **dadurch gekennzeichnet, daß** der Aktuator als ein Linearantrieb ausgeführt ist, der einen Elektromotor und eine Kugelrampe aufweist.

13. Automatgetriebe nach Anspruch 10, **dadurch gekennzeichnet, daß** der Aktuator als ein piezoelektrischer Aktor ausgebildet ist.

14. Automatgetriebe nach einem der Ansprüche 10 bis 13, **dadurch gekennzeichnet, daß** der Aktuator einen exzentrischen Antrieb aufweist.

15. Automatgetriebe nach einem der Ansprüche 10 bis 14, **dadurch gekennzeichnet, daß** mittels einer Aktuatoreinrichtung ein axialer Abstand zwischen den Kegelscheiben (2A, 2B bzw. 3A, 3B) eines Kegelscheibensatzes (2 bzw. 3) variierbar ist, wobei jeweils eine erste Kegelscheibe (2B bzw. 3A) in Bezug auf die korrespondierende zweite Kegelscheibe (2A bzw. 3B) eines Kegelscheibensatzes (2 bzw. 3) in axialer Richtung der Welle (6 bzw. 7) verschiebbar ist.

16. Automatgetriebe nach einem der Ansprüche 1 bis 15, **dadurch gekennzeichnet, daß** mindestens eine axial bewegliche Kegelscheibe (2B, 3A) mit einer Drehmomentrampe zur Einstellung einer drehmomentabhängigen Anpreßkraft zwischen den Kegelscheiben (2A, 2B bzw. 3A, 3B) eines Kegelscheibensatzes (2, 3) und dem Umschlingungselement (4) wirkverbunden ist.

17. Automatgetriebe nach einem der Ansprüche 10 bis 13, **dadurch gekennzeichnet , daß** jeweils beide Kegelscheiben (2A, 2B bzw. 3A, 3B) eines Kegelscheibensatzes (2 bzw. 3) in axialer Richtung der Welle (6 bzw. 7) verschiebbar sind.

18. Automatgetriebe nach einem der Ansprüche 1 bis 17, **dadurch gekennzeichnet, daß** eine erste Kegelscheibe gegen eine zweite Kegelscheibe und/oder eine zweite Kegelscheibe gegen eine erste Kegelscheibe mindestens eines Kegelscheibensatzes translatorisch derart verschiebbar ist, daß zwischen den Drehachsen der Kegelscheiben in radialer Richtung der Kegelscheiben eines Kegelscheibensatzes ein Versatz vorliegt.

19. Automatgetriebe nach einem der Ansprüche 1 bis 18, **dadurch gekennzeichnet, daß** wenigstens eine Kegelscheibe gegenüber einer weiteren Kegelscheibe eines. Kegelscheibensatzes eine taumelnde Bewegung ausführt.

## Claims

1. Automatic transmission (1) having a variator (5) comprising at least two conical disc sets (2, 3), wherein over the conical disc sets (2, 3) a pulley element (4) is guided for torque transmission with infinitely variable ratio variation and the arrangement of the axes of rotation of two conical discs (3A, 3B) of a conical disc set (3) relative to one another is variable, **characterized in that** acting at least on one of the conical discs (3B) is an actuator for varying the arrangement between the axes of rotation of the conical discs (3A, 3B) of a conical disc set (3), and that a variation of the ratio is effected by a tilting movement of a conical disc (3B) about a tilting axis (9), and that a change of the axial distance between the conical discs (3A, 3B) of the conical disc sets (2, 3) is provided merely for assisting the variation of the ratio.

2. Automatic transmission according to claim 1, **characterized in that** at least a first conical disc (3B) is tiltable in relation to a second conical disc (3A) of a conical disc set (3).

3. Automatic transmission according to claim 2, **characterized in that** the first conical disc (3B) is tiltable about a tilting axis (9) that is disposed at right angles to the axis of rotation of the first conical disc (3B).

4. Automatic transmission according to claim 3, **characterized in that** the tilting axis (9) extends at least approximately parallel to an idle strand (15) or load strand of the belt (4).

5. Automatic transmission according to one of claims 2 to 4, **characterized in that** both the first conical disc (3B) and the second conical disc (3A) are tiltable in relation to the second conical disc (3A) and the first conical disc (3B) respectively.

6. Automatic transmission according to one of claims 2 to 5, **characterized in that** the tiltable first conical disc (3B) is connected in a rotationally fixed manner to a shaft (7).

7. Automatic transmission according to claim 6, **characterized in that** the rotationally fixed connection between the first conical disc (3B) and the shaft (7) is designed in such a way that the conical disc (3B) tilts from a specific application pressure between the first conical disc (3B) and the belt (4) on.

8. Automatic transmission according to claim 6 or 7, **characterized in that** the rotationally fixed connection takes the form of a homocinetic joint (8).

9. Automatic transmission according to claim 6 or 7, **characterized in that** the rotationally fixed connection between the conical disc (3B) and the shaft (7) is of an elastic design.

10. Automatic transmission according to one of claims 1 to 9, **characterized in that** acting on at least one of the conical discs (3B) is an actuator for varying the arrangement between the axes of rotation of the conical discs (3A, 3B) of a conical disc set (3).

11. Automatic transmission according to claim 10, **characterized in that** the actuator takes the form of a linear drive, which comprises an electric motor and a spindle.

12. Automatic transmission according to claim 10, **characterized in that** the actuator takes the form of a linear drive, which comprises an electric motor and a ball ramp.

13. Automatic transmission according to claim 10, **characterized in that** the actuator takes the form of a piezoelectric actuator.

14. Automatic transmission according to one of claims 10 to 13, **characterized in that** the actuator has an eccentric drive.

15. Automatic transmission according to one of claims 10 to 14, **characterized in that** by means of an actuating device an axial distance between the conical discs (2A, 2B and/or 3A, 3b) of a conical disc set (2 and/or 3) is variable, wherein in each case a first conical disc (2B and/or 3A) is displaceable in axial direction of the shaft (6 and/or 7) in relation to the corresponding second conical disc (2A and/or 3B) of a conical disc set (2 and/or 3).

16. Automatic transmission according to one of claims 1 to 15, **characterized in that** at least one axially movable conical disc (2B, 3A) is workingly connected to a torque ramp for setting a torque-dependent application force between the conical discs (2A, 2B and/or 3A, 3B) of a conical disc set (2, 3) and the pulley element (4).

17. Automatic transmission according to one of claims 10 to 13, **characterized in that** in each case both conical discs (2A, 2B and/or 3A, 3B) of a conical disc set (2 and/or 3) are displaceable in axial direction of the shaft (6 and/or 7).

18. Automatic transmission according to one of claims 1 to 17, **characterized in that** a first conical disc is displaceable in a translatory manner towards a second conical disc and/or a second conical disc is displaceable in a translatory manner towards a first conical disc of at least one conical disc set in such a way that there is an offset between the axes of rotation of the conical discs in radial direction of the conical discs of a conical disc set.

19. Automatic transmission according to one of claims 1 to 18, **characterized in that** at least one conical disc executes a wobbling motion relative to a further conical disc of a conical disc set.

## Revendications

1. Transmission automatique (1) comportant un variateur (5) présentant au moins deux jeux (2, 3) de poulies coniques, dans laquelle un élément d'enroulement (4) pour la transmission du couple de rotation avec variation continue du rapport de vitesses est guidé sur les jeux (2, 3) de poulies coniques et la disposition des axes de rotation des deux poulies coniques (3A, 3B) d'un jeu (3) de poulies coniques peut être modifiée l'un par rapport à l'autre, **caractérisée en ce qu'**un actionneur pour modifier la disposition entre les axes de rotation des poulies coniques (3A, 3B) d'un jeu (3) de poulies coniques entre en prise avec une des poulies coniques (3B) et **en ce qu'**un ajustement du rapport de vitesses a lieu par un mouvement de basculement d'une poulie conique (3B) autour d'un axe de basculement (9) et **en ce qu'**une modification de la distance axiale entre les poulies coniques (3A, 3B) des jeux (2, 3) de poulies coniques est uniquement prévue pour soutenir l'ajustement du rapport de vitesses.

2. Transmission automatique selon la revendication 1, **caractérisée en ce qu'**au moins une première poulie conique (3B) peut être basculée par rapport à une deuxième poulie conique (3A) d'un jeu (3) de poulies coniques.

3. Transmission automatique selon la revendication 2, **caractérisée en ce que** la première poulie conique (3B) peut être basculée autour de son axe de basculement qui est disposé perpendiculairement à l'axe de rotation de la première poulie conique (3B).

4. Transmission automatique selon la revendication 3, **caractérisée en ce que** l'axe de basculement (9) s'étend au moins de manière approximativement parallèle à un brin mené « mou » (15) ou au brin menant « tendu » de la courroie (4)

5. Transmission automatique selon une des revendications 2 à 4, **caractérisée en ce que** la première poulie conique (3B) peut être basculée par rapport à la deuxième poulie conique (3A) aussi bien que la deuxième poulie conique (3A) peut l'être par rapport à la première poulie conique (3B).

6. Transmission automatique selon une des revendications 2 à 5, **caractérisée en ce que** la première poulie conique (3B) basculable est connectée de manière résistant à la torsion à un arbre (7).

7. Transmission automatique selon la revendication 6, **caractérisée en ce que** la connexion résistant à la torsion entre la première poulie conique (3B) et l'arbre (7) est réalisée de telle manière que la poulie conque (3B) bascule à partir d'une certaine force de compression entre la première poulie conique (3B) et la courroie (4).

8. Transmission automatique selon la revendication 6 ou 7, **caractérisée en ce que** la connexion résistant à la torsion est réalisée comme un joint homocinétique (8).

9. Transmission automatique selon la revendication 6 ou 7, **caractérisée en ce que** la connexion résistant à la torsion est réalisée de manière élastique entre la poulie conique (3B) et l'arbre (7).

10. Transmission automatique selon une des revendications 1 à 9, **caractérisée en ce qu'**un actionneur destiné à faire varier la disposition entre les axes de rotation des poulies coniques (3A, 3B) d'un jeu (3) de poulies coniques entre en prise avec au moins une des poulies coniques (3B).

11. Transmission automatique selon la revendication 10, **caractérisée en ce que** l'actionneur est réalisé comme un entraînement linéaire qui présente un moteur électrique et une broche.

12. Transmission automatique selon la revendication 10, **caractérisée en ce que** l'actionneur est réalisé comme un entraînement linéaire qui présente un moteur électrique et une rampe à billes.

13. Transmission automatique selon la revendication 10, **caractérisée en ce que** l'actionneur est configuré comme un acteur piézoélectrique.

14. Transmission automatique selon une des revendications 10 à 13, **caractérisée en ce que** l'actionneur présente un entraînement excentrique.

15. Transmission automatique selon une des revendications 10 à 14, **caractérisée en ce qu'**un dispositif actionneur peut faire varier une distance axiale entre les poulies coniques (2A, 2B ou encore 3A, 3B) d'un jeu (2 ou encore 3) de poulies coniques, une poulie conique (2B ou encore 3A) pouvant être déplacée chaque fois par rapport à la deuxième poulie conique (2A ou encore 3B) correspondante dans le sens axial de l'arbre (6 ou encore 7).

16. Transmission automatique selon une des revendications 1 à 15, **caractérisée en ce qu'**au moins une poulie conique (2B, 3A) axialement mobile est reliée de manière active à une rampe de couple de rotation pour régler une force de compression dépendant du couple de rotation entre les poulies coniques (2A, 2B ou encore 3A, 3B) d'un jeu (2, 3) de poulies coniques et l'élément d'enroulement (4).

17. Transmission automatique selon une des revendications 10 à 13, **caractérisée en ce que** les deux poulies coniques (2A, 2B ou encore 3A, 3B) d'un jeu (2 ou encore 3) de poulies coniques peuvent être respectivement déplacées dans le sens axial de l'arbre (6 ou encore 7).

18. Transmission automatique selon une des revendications 1 à 17, **caractérisée en ce qu'**une première poulie conique peut être déplacée par translation vis-à-vis d'une deuxième poulie conique et/ou une deuxième poulie conique peut être déplacée par translation vis-à-vis d'une première poulie conique d'au moins un jeu de poulies coniques de telle manière qu'il y ait un décalage entre les axes de rotation des poulies coniques dans le sens radial des poulies coniques d'un jeu de poulies coniques.

19. Transmission automatique selon une des revendications 1 à 18, **caractérisée en ce qu'**au moins une poulie conique exécute un mouvement oscillant par rapport à une poulie conique d'un jeu de poulies coniques.
